# EUROPÄISCHE PATENTSCHRIFT

(11) **EP 2 848 403 B1**
(45) Veröffentlichungstag und Bekanntmachung des Hinweises auf die Patenterteilung: **22.03.2017**
(21) Anmeldenummer: 14182074.6
(22) Anmeldetag: 25.08.2014
(51) Int. Cl.: B32B 27/08, B32B 27/10, B32B 27/18, B32B 37/15, C09J 7/00

(54) **Oberflächenschutzfolie**
Surface protection film
Feuille de protection de surface

(30) Priorität: 27.08.2013 AT 6582013; 30.09.2013 AT 7532013
(43) Veröffentlichungstag der Anmeldung: 18.03.2015
(73) Patentinhaber: Isosport Verbundbauteile Gesellschaft m.b.H., 7000 Eisenstadt (AT)
(72) Erfinder: Gornik, Christian, 2491 Neufeld (AT); Dohe, Dieter, 49525 Lengerich (DE)
(74) Vertreter: Torggler & Hofinger Patentanwälte

(56) Entgegenhaltungen:
- WO-A1-2013/033067
- US-A1- 2012 088 054

## Beschreibung

Die vorliegende Erfindung betrifft Oberflächenschutzfolien gemäß den Merkmalen des Oberbegriffs des Anspruchs 1 sowie ein Verfahren zur Herstellung derselben gemäß den Merkmalen des Oberbegriffs des Anspruchs 8.

Oberflächenschutzfolien zum temporären Schutz von Bauteilen sind aus der DE 43 11 322 A1, der EP 1 388 582 A1, der EP 2 248 653 A2 und der DE 10 2009 020 624 A1 hinlänglich bekannt.

Aus der US 2012/0088054 A1 und der WO 2013/033067 A1 sind Folien mit zwischen einer Trägerschicht und einer Adhäsionsschicht angeordneten Bedruckung bekannt.

Üblicherweise werden die Schutzfolien nach der Montage der genannten Bauteile wieder entfernt, wobei keine Klebereste oder Ähnliches auf den Bauteilen verbleiben sollen.

Für den effektiven Einsatz derartiger Oberflächenschutzfolien ist es notwendig, dass deren Adhäsionsschicht nicht an der anderen Seite der Oberflächenschutzfolie haftet. Denn nur so ist es möglich, die Oberflächenschutzfolie als Rolle zu transportieren und zu lagern. Ist die Haftung zwischen Adhäsionsschicht und Oberseite der Schutzfolie zu groß, ist es entweder nicht möglich dieselbe von der Rolle abzurollen oder es entstehen während des Abrollens irreparable Folienüberdehnungen oder Kleberübertrag bzw. Defekte.

Der beschriebene Sachverhalt steht nun im Widerspruch mit dem Wunsch die Oberflächenschutzfolie zu bedrucken. Gewünschte Bedruckungen können z.B. Modellnummern für Produkte, Verarbeitungshinweise oder Hersteller- und/oder Warenbezeichnungen sein.

Weder die haftende Seite noch die Oberfläche der Schutzfolie sind für das Bedrucken geeignet. Denn bei der Adhäsionsschicht einerseits würde durch die Bedruckung die Klebefunktion beeinträchtigt.

Einer Bedruckung der äußeren Oberfläche der Schutzfolie andererseits steht zum einen entgegen, dass die Bedruckung durch Einwirkung von außen abgerieben oder anderweitig, z.B. durch Lösungsmittel, verwischt oder entfernt werden kann. Durch die Ausübung der Schutzfunktion würde die Bedruckung der Oberflächenschutzfolie also beeinträchtigt.

Zum anderen beeinträchtigt die Bedruckung natürlich auch Maßnahmen, welche das Haften der äußeren Oberfläche an der Adhäsionsschicht verhindern. Eine solche Maßnahme ist das Versehen der Oberfläche mit einer genau definierten Rauigkeit, wie dies in der EP 2 248 653 A2 offengelegt wird.

Um spiegelglatte Oberflächen von Bauteilen durch Schutzfolien zu schützen, ist es erforderlich, dass die Adhäsionsschicht der Schutzfolie ebenfalls spiegelglatt und frei von Stippen oder sonstigen Oberflächenfehlern ist. Ansonsten kommt es zu einer Verschlechterung des Glanzes und der Oberflächenqualität der zu schützenden Oberfläche, was nach dem Entfernen der Schutzfolie sichtbar wird. Insbesondere in diesem Fall ist eine Bedruckung der Adhäsionsschicht also nicht zielführend.

Aufgabe der Erfindung ist es eine Oberflächenschutzfolie bereitzustellen, welche mit einer Bedruckung versehen ist, welche die Funktion der Oberflächenschutzfolie nicht beeinträchtigt. Des Weiteren soll ein Verfahren zur Herstellung einer solchen Oberflächenschutzfolie bereitgestellt werden.

Diese Aufgabe wird durch eine Oberflächenschutzfolie mit den Merkmalen des Anspruchs 1 sowie ein Verfahren zur Herstellung von Oberflächenschutzfolien gemäß den Merkmalen des Anspruchs 8 gelöst.

Zentrale Erkenntnis der Erfindung ist, dass es möglich ist, die Bedruckung zwischen zwei Schichten der Oberflächenschutzfolie anzuordnen.

Die Art der Bedruckung ist für die Erfindung nicht wesentlich. Insbesondere können erfindungsgemäße Oberflächenschutzfolien mit alphanumerischen Zeichen sowie Bildern bedruckt werden.

Beispiele für Bauteile und Halbzeuge, welche durch erfindungsgemäße Oberflächenschutzfolien temporär geschützt werden, sind Kunststoffplatten oder Kunststoffprofile für die Sanitär- oder die Bauindustrie, lackierte oder unlackierte Metallbänder oder Platten (beispielsweise aus Edelstahl), Elemente oder Oberflächen der Möbelindustrie sowie Sportartikel und dergleichen.

Es ist vorgesehen, dass die Außenschicht Release-Additive, vorzugsweise Carbamate, Silikone, Siloxane oder fluorhältige Kohlenwasserstoffe, aufweist, welche die Haftung an der Adhäsionsschicht im Rollenwickel verringern. Diese Gruppen weisen eine geringe Adhäsion gegenüber anderen Werkstoffen auf. Typische Vertreter sind Genioplast Pellet S (Hersteller: Wacker Chemie), Siloxane-Masterbatches (Hersteller: Mulitbase) und Modiper FS700 sowie Modiper F600 (Hersteller: NOF Corporation). Als weiterer Vorteil ist zu nennen, dass diese Additive üblicherweise auch eine reduzierte Reibung zeigen. Wird also ein anderes Bauteil über die applizierte Oberflächenschutzfolie gezogen, so gleitet dieses Bauteil leicht ab, was die Wahrscheinlichkeit einer Beschädigung der Schutzfolie reduziert.

Weitere vorteilhafte Ausführungsformen der Erfindung sind in den abhängigen Ansprüchen definiert.

Sowohl die Trägerschicht als auch die Adhäsionsschicht kann mehrschichtig ausgeführt sein. Bevorzugt kann die Trägerschicht und/oder die Adhäsionsschicht durch Coextrusion hergestellt sein.

Eine Trägerschicht der Oberflächenschutzfolie kann eine von der Adhäsionsschicht abgewandte Außenschicht sowie eine der Adhäsionsschicht zugewandte Innenschicht aufweisen. Dies ermöglicht es, die Innenschicht so zu optimieren, dass das Bedrucken leicht möglich ist.

Eine Verbesserung der Bedruckbarkeit der Innenschicht kann durch Bedruckbarkeitsadditive erreicht werden.

Zur Verbesserung der Bedruckbarkeit können außerdem Corona- oder Plasmabehandlungen durchgeführt werden.

Insbesondere dann, wenn die Haftung der Oberflächenschutzfolie durch eine Adhäsionsschicht mit einer sehr geringen Oberflächenrauigkeit erreicht wird, kann es vorgesehen sein, dass die Adhäsionsschicht eine außen liegende Haftschicht und eine Zwischenschicht aufweist. Die Zwischenschicht besteht dabei vorzugsweise aus einem Material, welches bei Raumtemperatur eine gewisse Kriechneigung aufweist. Ein verbessertes Anschmiegen der Oberflächenschutzfolie an die zu schützende Oberfläche wird dadurch erreicht, wobei dieser Effekt optimiert ist, wenn die Zwischenschicht in direktem Kontakt mit der Haftschicht steht.

Sowohl die Trägerschicht als auch die Adhäsionsschicht, besonders bevorzugt aber die Haftschicht und die Zwischenschicht, können zur Verbesserung der Außenbewitterungseignung der Schutzfolie UV-Additive (Absorber / Stabilisatoren) enthalten.

Besonders bevorzugt vorgesehen ist, dass die Haftschicht Styrol-Block-Copolymere sowie Tackifier aufweist, wobei das Stoffmengenverhältnis zwischen Styrol-Block-Copolymeren und Tackifiern zwischen 99:1 und 50:50, vorzugsweise zwischen 90:10 und 70:30, liegt. Zur Einstellung der Klebekraft ist es auch möglich, diese Materialien mit Kunststoffen abzumischen, welches selbst keine oder nur eine eingeschränkte Klebekraft besitzen und mit den genannten Kunststoffgruppen verträglich sind, wie z.B. Polyethylen (PE) oder Polypropylen (PP). Als Styrol-Block-Copolymere können beispielsweise Styrol-Ethylen-Butylen-Styrol (SEBS), Styrol-Ethylen-Propylen-Styrol (SEPS) oder Styrene-Isopren-Butadien (SIBS) Block-Copolymere zum Einsatz kommen.

Die Tackifier können aus der Gruppe der hydrogenierten, aliphatischen oder aromatischen thermoplastischen Harze, der Gruppe der Kolophoniumharze oder der Gruppe der Terpene sein. In Versuchen hat sich gezeigt, dass Regalite R1100 (Hersteller: Eastman) oder Dertophene T105 (Hersteller: DRT) für diese Zwecke hervorragend geeignet sind.

Es kann weiterhin vorgesehen sein, dass die Zwischenschicht im Wesentlichen aus Kunststoff der Gruppen Styrol-Block-Copolymere, Polyolefin-Elastomere und/oder Polyolefin-Plastomere besteht. Für die vorliegenden Zwecke bevorzugte Vertreter dieser Gruppen sind beispielsweise Poly-Octen-Ethylen (POE), Ethylen-Vinyl-Acetat (EVA), Ethylen-Butyl-Acrylat (EBA), Ultra-low-density-Polyethylen (ULDPE).

Es kann aber auch vorgesehen sein, dass die Zwischenschicht als mechanische Stützschicht ausgebildet ist. Bevorzugt kommen Polyethylene - vorzugsweise LLDPE - und/oder Polypropylene zum Einsatz. Durch die Zusammensetzung der mechanischen Trägerschicht lassen sich mechanische Kennwerte wie beispielsweise E-Modul, Reißdehnung und Zugfestigkeit einstellen.

In einer weiteren bevorzugten Ausführungsform weist die Zwischenschicht eine Schichtdicke zwischen 4 µm und 20 µm, bevorzugt zwischen 4 µm und 12 µm und besonders bevorzugt zwischen 7 µm und 9 µm auf.

Bevorzugt kann es vorgesehen sein, dass die Haftschicht eine Schichtdicke zwischen 2 µm und 20 µm, bevorzugt zwischen 2µm und 10 µm und besonders bevorzugt zwischen 5 µm und 8 µm, aufweist.

Durch eine Reduktion der Schichtdicken für die Oberflächenschutzfolie kann die Menge des benötigten Rohmaterials niedrig gehalten werden, was sich positiv auf die Herstellungskosten auswirkt. Des Weiteren kann durch eine Reduktion der Schichtdicken eine Verbesserung der Kohäsion der Adhäsionsschicht erreicht werden.

Als Trägerschicht für Schutzfolien können Polyolefine, wie Polyethylen (PE) oder Polypropylen (PP) verwendet werden. Die Trägerschicht kann außerdem Zusatzstoffe, wie Hitzestabilisatoren, UV-Stabilisatoren, UV-Blocker, Antiblockadditive sowie Farbstoffe, beinhalten.

Beim erfindungsgemäßen Herstellungsverfahren wird die Bedruckung durch das Verbinden der Trägerschicht mit der Adhäsionsschicht zwischen diesen eingeschlossen.

In einer bevorzugten Ausführungsform des Herstellungsverfahrens wird die Trägerschicht im Wesentlichen inline ( also im Wesentlichen gleichzeitig) in einer Station auf einer Seite bedruckt und auf der anderen Seite mit einer Trennlackschicht versehen. Hierdurch kann die Herstellungsdauer verkürzt werden.

Das Auftragsgewicht (trocken) der Trennlackschicht kann dabei zwischen 0,03 g/m² und 1,5 g/m², bevorzugt zwischen 0,05 g/m² und 0,5 g/m² und besonders bevorzugt zwischen 0,08 g/m² und 0,15 g/m², betragen.

Die Herstellungsdauer kann weiter verkürzt werden, indem die Trägerschicht und/oder die Adhäsionsschicht mittels eines Flexodruck-Verfahrens oder eines Tiefdruckverfahrens bedruckt wird. Dabei wird die zu bedruckende Folie zwischen zwei Walzen hindurchgeführt, wobei eine der Walzen die Druckform trägt und die andere Walze einen Gegendruck erzeugt. Indem die Gegendruckwalze gleichzeitig zum Aufbringen eines Trennlackes verwendet wird, ist zum einen möglich, wie angesprochen, die Produktionszeit zu verkürzen und zum anderen kann der Kostenaufwand für die Produktionsanlage selbst verringert werden.

Es kann vorgesehen sein Tackifier in die Adhäsionsschicht mitzuextrudieren, wodurch das Versehen der Adhäsionsschicht oder eines Teiles der Ahäsionsschicht mit Tackifiern besonders einfach gestaltet werden kann.

In einer weiteren bevorzugten Ausführungsform wird die Trägerschicht mit der Adhäsionsschicht durch Verpressen zwischen einer Kühlwalze einerseits und einem Glättband oder einer Gegendruckrolle andererseits verbunden. Insbesondere kann dabei vorgesehen sein, dass die Verbindung der Trägerschicht mit der Adhäsionsschicht durch sogenanntes Extrusionskaschieren geschieht. Das heißt, die Verbindung zwischen diesen Schichten wird nicht durch Klebstoffe erzeugt, sondern dadurch, dass die Folien miteinander verpresst werden, während zumindest eine der Schichten noch teilweise geschmolzen ist. Insbesondere kann die Trägerschicht durch direktes Verschmelzen mit der Adhäsionsschicht verbunden werden.

Klebstoffe zeigen eine gewisse Neigung zum Peeling, das heißt die durch den Klebstoff zu verbindenden Folien können voneinander abgezogen werden, insbesondere dann, wenn bereits eine partielle Trennung der Folien vorliegt. Deshalb kann eine klebstofffreie Verbindung der Trägerschicht mit der Adhäsionsschicht vorteilhaft sein.

Die Erzeugung der Haftwirkung der Adhäsionsschicht kann durch eine Oberfläche derselben erreicht werden, welche so glatt ist, dass die intermolekularen Kräfte zwischen der Adhäsionschicht und einer zu schützenden Oberfläche eine Anhaftkraft erzeugen. Diese glatte Oberfläche kann durch eine entsprechende Ausgestaltung einer Kühlwalze oder eines Glättbandes bzw. einer Gegendruckrolle hergestellt werden. Auch in dieser Hinsicht kann die erfindungsgemäße Oberflächenschutzfolie also klebstofffrei gestaltet werden. Dies kann insbesondere deshalb von Vorteil sein, weil Klebstoffe beim Abziehen der Oberflächenschutzfolien oft unerwünschte Rückstände auf der zu schützenden Oberfläche hinterlassen.

Es ist aber ebenso denkbar, die Adhäsionsschicht mit einer separaten Klebstoffschicht zu versehen. Dies ermöglicht eine vereinfachte Herstellung.

Erfindungsgemäße Oberflächenschutzfolien eignen sich besonders zum temporären Schutz von Baumaterialien und Halbzeugen, insbesondere PVC-Fensterprofile sowie Kunststofffolien und -platten, welche durch Tiefziehen verarbeitet werden, bevor die Oberflächenschutzfolie abgezogen wird. Weitere Beispiele umfassen Sportartikel, insbesondere zum Schutz von Skioberflächen, Möbelelemente und lackierte sowie unlackierte Metalloberflächen.

Weiterhin ist die erfindungsgemäße Oberflächenschutzfolie besonders bei sogenannten Formable Coatings (auch: "formable hard coat"), das heißt formbaren Beschichtungen, geeignet, wobei die Oberflächenschutzfolie an der formbaren Beschichtung haftet, die formbare Beschichtung auf ein zu beschichtendes Objekt aufgebracht wird und dann die Oberflächenschutzfolie von der formbaren Beschichtung, vorzugsweise rückstandsfrei, entfernt wird.

Eine Gesamtdicke einer erfindungsgemäßen Oberflächenschutzfolie beträgt bevorzugt zwischen 20 µm und 100 µm, besonders bevorzugt zwischen 40 µm und 80 µm und ganz bevorzugt zwischen 40 µm und 60 µm.

Drei Ausführungsbeispiele der Erfindung werden infolge anhand der Figuren erläutert. Dabei zeigen:
- Fig. 1: einen Schichtenaufbau einer erfindungsgemäßen Oberflächenschutzfolie,
- Fig. 2: den Schichtenaufbau der Trägerschicht nach der Extrusion,
- Fig. 3: die Trägerschicht zusammen mit einer aufgebrachten Bedruckung sowie
- Fig. 4: schematisch eine Anordnung zur Durchführung eines erfindungsgemäßen Herstellungsverfahrens.

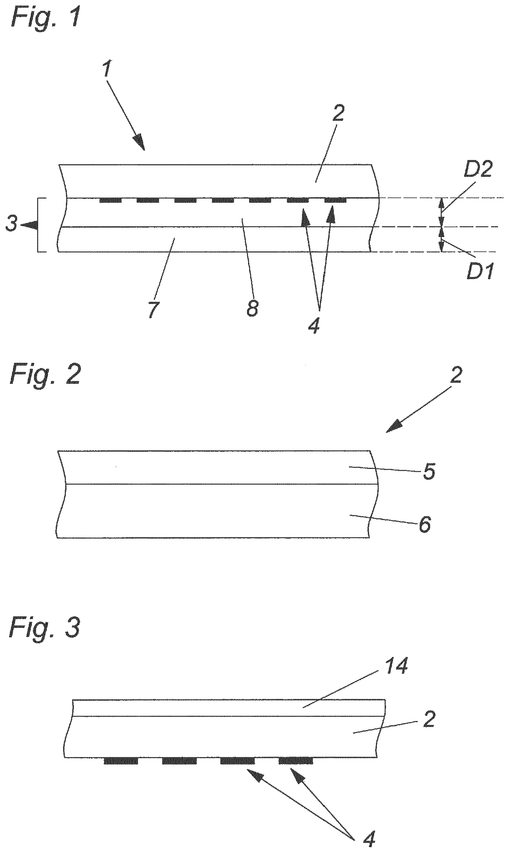

Fig. 1 zeigt den Schichtenaufbau einer erfindungsgemäßen Oberflächenschutzfolie 1. Dabei ist zunächst die Trägerschicht 2 sowie die Adhäsionsschicht 3 zu erkennen. Die optionale Substruktur der Trägerschicht 2 ist in Fig. 2 dargestellt.

Wie in Fig. 1 weiterhin zu erkennen ist, besteht die Adhäsionsschicht 3 aus einer Haftschicht 7 sowie einer Zwischenschicht 8. Die Schichtdicke D1 der Haftschicht 7 beträgt zwischen 5 µm und 8 µm. Die Schichtdicke D2 der Zwischenschicht 8 beträgt zwischen 7 µm und 9 µm.

Die Gesamtdicke der Oberflächenschutzfolie 1 beträgt in diesem Ausführungsbeispiel 50 µm.

Die Bedruckung 4 ist zwischen der Trägerschicht 2 und der Adhäsionsschicht 3 angeordnet.

Fig. 2 zeigt die Trägerschicht 2 nach deren Extrusion. Die Außenschicht 5 und die Innenschicht 6 der Trägerschicht 2 sind zu erkennen. Beide Schichten sind vorzugsweise aus einem Polyolefin gefertigt, wobei sie sich durch die Wahl des Polyolefins und durch etwaige Zusatzstoffe unterscheiden. Die Zusatzstoffe bzw. die Wahl des Polyolefins wird dabei im Hinblick darauf getroffen, bei der Innenschicht 6 die Bedruckbarkeit zu verbessern und bei der Außenschicht 5 die als Release-Eigenschaft bekannte Antihaftwirkung zur Adhäsionsschicht zu verbessern.

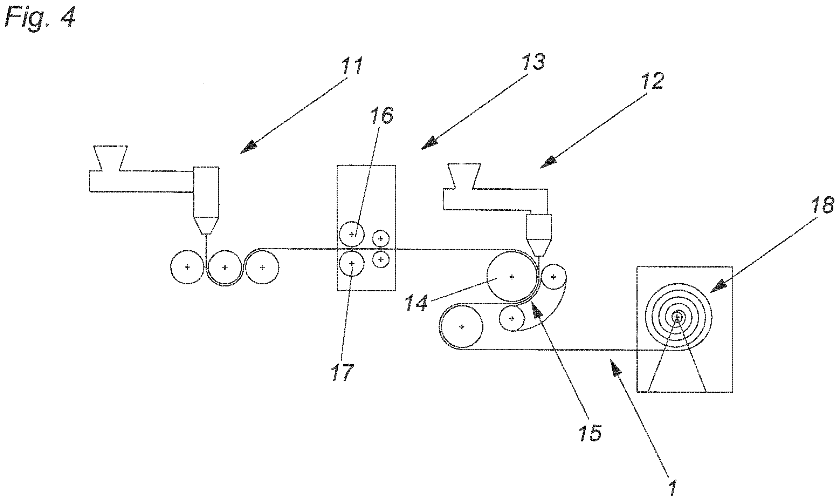

Fig. 3 zeigt die Trägerschicht 2, nachdem sie die Station 13 verlassen hat (siehe Fig. 4), wobei sie in der Station 13 mit der Bedruckung 4 sowie einer Trennlackschicht 14 versehen wurde.

Fig. 4 verdeutlicht schematisch das erfindungsgemäße Herstellungsverfahren. In einem ersten Extruder 11 wird die Trägerschicht 2 extrudiert, in einem zweiten Extruder 12 wird die Adhäsionsschicht 3 extrudiert.

Nach der Extrusion der Trägerschicht 2 passiert diese die Station 13, in welcher die Trägerschicht 2 per Flexodruckverfahren oder Tiefdruckverfahren bedruckt wird und mit einer Trennlackschicht versehen wird. Hierfür wird die Trägerschicht 2 zwischen einer Druckwalze 16 und einer Gegendruckwalze 17 hindurchgeführt, wobei die Druckwalze 16 das Druckbild trägt und mittels der Gegendruckwalze 17 gleichzeitig der Trennlack aufgebracht wird. Die Dicke der Trennlackschicht beträgt unter 1 µm.

Die so bearbeitete Trägerschicht 2 wird zusammen mit der Adhäsionsschicht 3 in einem Spalt zwischen einer Kühlwalze 14 und einem - umlaufend ausgeführten - Glättband 15 verpresst. (Statt des Glättbandes 15 kann auch eine Gegendruckwalze verwendet werden.) Dadurch, dass der zweite Extruder 12 sehr nahe an der Kühlwalzen-Glättband-Kombination angeordnet ist, wird die Adhäsionsschicht 3 beim Eintritt in den Spalt noch nicht vollständig ausgekühlt sein. Durch den Kontakt zwischen bearbeiteter Trägerschicht 2 und Adhäsionsschicht 3 und dadurch, dass durch die Kühlwalze 14 eine Abkühlung erzeugt wird, entsteht eine stoffschlüssige Verbindung zwischen Trägerschicht 2 und Adhäsionsschicht 3.

Mittels des Glättbandes 15 (oder der Gegendruckwalze) wird durch den Prozessdruck zur Kühlwalze 14 (Chill-Rollwalze) eine sehr glatte Oberfläche der Adhäsionsschicht erzeugt. Dies erzeugt die Hafteigenschaft der Adhäsionsschicht oder wirkt sich zumindest unterstützend dabei aus.

Schließlich wird die Oberflächenschutzfolie auf einer Aufrollvorrichtung 18 aufgerollt.

### Ausführungsbeispiel 1:

In diesem Ausführungsbeispiel besteht die Trägerschicht 2 aus einem High-Density Polyethylen (HDPE). Die Haftschicht 7 besteht aus einem Compound aus Styrol-Ethylen-Propylen-Styrol-Block-Copolymer (SEPS) mit einem Styrolanteil von 13% und einem Tackifier aus der Gruppe der Hydrocarbonharze. Das Stoffmengenverhältnis von SEPS zu Tackifier beträgt 80:20. Die Zwischenschicht 8 besteht aus Ethylen-Vinyl-Acetat (EVA) mit einem Vinylacetat-Anteil von 18%.

### Ausführungsbeispiel 2:

In diesem Ausführungsbeispiel ist die Trägerschicht 2 coextrudiert, wobei die Innenschicht 6 aus einem Low-Density Polyethylen (LDPE) besteht und die Außenschicht aus LDPE zusammen mit einem Release Additiv aus der Gruppe der Acryl-Silikon-Block-Copolymere besteht. Die Zwischenschicht 8 besteht aus einem Ultra-Low-Density Polyethylen (ULDPE). Die Haftschicht 7 besteht aus einem Compound aus Styrol-Ethylen-Butylen-Styrol (SEBS) und einem Tackifier aus der Gruppe der Terpenharze.

### Ausführungsbeispiel 3:

In diesem Ausführungsbeispiel besteht die Trägerschicht 2 aus einem LLDPE (linear low density polyethylene). Die Trägerschicht 2 weist an der Außenseite einen Trennlack auf. Die Innenseite der Trägerschicht 2 ist bedruckt und - vorzugsweise vollflächig - mit einem Primer auf Basis eines Zweikomponenten-Polyurethanklebstoffes beschichtet. Die Zwischenschicht 8 ist in diesem Fall als mechanische Stützschicht ausgebildet und besteht aus einem Blend aus 65% LDPE und 35% PP. Die Haftschicht 7 besteht aus einem Compound aus SEPS mit einem Styrolanteil von 13% und einem Tackifier aus der Gruppe der Hydrocarbonharze.

## Patentansprüche

1. Oberflächenschutzfolie mit einer Trägerschicht (2) und einer damit verbundenen Adhäsionsschicht (3), wobei eine Bedruckung (4) zwischen der Trägerschicht (2) und der Adhäsionsschicht (3) angeordnet ist und die Trägerschicht (2) eine Außenschicht (5) und eine Innenschicht (6) aufweist, **dadurch gekennzeichnet, dass** die Außenschicht (5) Release-Additive aufweist, welche die Haftung an der Adhäsionsschicht (3) im Rollenwickel verringern.

2. Oberflächenschutzfolie nach Anspruch 1, **dadurch gekennzeichnet, dass** die Trägerschicht (2) und/oder die Adhäsionsschicht (3) mehrschichtig ist.

3. Oberflächenschutzfolie nach Anspruch 1 oder 2, **dadurch gekennzeichnet, dass** die Innenschicht (6) Bedruckbarkeitsadditive aufweist, welche die Bedruckbarkeit verbessern, und/oder dass die Innenschicht (6) zur Verbesserung der Bedruckbarkeit mittels einer Coronabehandlung vorbehandelt ist.

4. Oberflächenschutzfolie nach einem der Ansprüche 1 bis 3, **dadurch gekennzeichnet, dass** die Release-Additive Carbamate, Silikone, Siloxane oder fluorhältige Kohlenwasserstoffe sind.

5. Oberflächenschutzfolie nach einem der Ansprüche 1 bis 4, **dadurch gekennzeichnet, dass** die Adhäsionsschicht (3) eine außen liegende Haftschicht (7) und eine Zwischenschicht (8) aufweist.

6. Oberflächenschutzfolie nach Anspruch 5, **dadurch gekennzeichnet, dass** die Zwischenschicht (8) im Wesentlichen aus Kunststoff der Gruppen Styrol-Block-Copolymere, Polyolefin-Elastomere und/oder Polyolefin-Plastomere besteht.

7. Oberflächenschutzfolie nach Anspruch 5 oder 6, **dadurch gekennzeichnet, dass** die Zwischenschicht (8) im Wesentlichen aus einem Polyethylen - vorzugsweise einem LLDPE - und/oder einem Polypropylen besteht.

8. Verfahren zur Herstellung von Oberflächenschutzfolien, insbesondere nach einem der Ansprüche 1 bis 7, wobei eine Trägerschicht (2) in einem ersten Extruder (11) extrudiert wird, eine Adhäsionsschicht (3) in einem zweiten Extruder (12) extrudiert wird und die Trägerschicht (2) mit der Adhäsionsschicht (3) verbunden wird, **dadurch gekennzeichnet, dass** die Trägerschicht (2) und/oder die Haftschicht (3) bedruckt wird und diese Bedruckung durch das Verbinden der Trägerschicht (2) mit der Adhäsionsschicht (3) zwischen diesen eingeschlossen wird.

9. Verfahren nach Anspruch 8, **dadurch gekennzeichnet, dass** die Trägerschicht (2) im Wesentlichen inline in einer Station auf einer Seite bedruckt wird und auf der anderen Seite mit einer Trennlackschicht versehen wird.

10. Verfahren nach Anspruch 8 oder 9, **dadurch gekennzeichnet, dass** die Trägerschicht (2) und/oder die Adhäsionsschicht (3) mittels eines Flexodruck-Verfahrens oder eines Tiefdruckverfahrens bedruckt wird.

11. Verfahren nach einem der Ansprüche 8 bis 10, **dadurch gekennzeichnet, dass** die Trägerschicht (2) mit der Adhäsionsschicht (3) durch Verpressen zwischen einer Kühlwalze (14) einerseits und einem Glättband (15) oder einer Gegendruckrolle andererseits verbunden wird, wobei die Trägerschicht (2) mit der Adhäsionsschicht (3) vorzugsweise verpresst wird, während die Trägerschicht (2) und/oder die Adhäsionsschicht (3) noch zumindest teilweise aufgeschmolzen sind.

12. Verfahren nach Anspruch 11, **dadurch gekennzeichnet, dass** mittels des Glättbandes (15) oder der Gegendruckrolle eine Oberfläche der Adhäsionsschicht (3) erzeugt wird, welche so glatt ist, dass die intermolekularen Kräfte zwischen der Adhäsionschicht (3) und einer zu schützenden Oberfläche eine Anhaftkraft erzeugen.

13. Verwendung einer Oberflächenschutzfolie nach einem der Ansprüche 1 bis 7 zum temporären Schutz von Kunststoff- oder Metalloberflächen für Bauelemente wie Fenster oder Türen und/oder lackierte oder unlackierte Metalloberflächen und/oder Sportartikeloberflächen und/oder Kunststoffoberflächen mit matter bis strukturierter Oberflächenbeschaffenheit.

14. Verwendung einer Oberflächenschutzfolie nach einem der Ansprüche 1 bis 7 bei einer formbaren Beschichtung, wobei die Oberflächenschutzfolie (1) an der formbaren Beschichtung haftet, die formbare Beschichtung auf ein zu beschichtendes Objekt aufgebracht wird und dann die Oberflächenschutzfolie (1) von der formbaren Beschichtung, vorzugsweise rückstandsfrei, entfernt wird.

## Claims

1. A surface protection film comprising a carrier layer (2) and an adhesion layer (3) connected thereto, wherein a printing (4) is arranged between the carrier layer (2) and the adhesion layer (3) and the carrier layer (2) has an outer layer (5) and an inner layer (6), **characterized in that** the outer layer (5) has release additives which reduce the adhesion to the adhesion layer (3) in the roll winding.

2. The surface protection film according to claim 1, **characterized in that** the carrier layer (2) and/or the adhesion layer (3) is of a multi-layer configuration.

3. The surface protection film according to claim 1 or 2, **characterized in that** the inner layer (6) has printability additives which improve the printability and/or that the inner layer (6) is pretreated by means of a corona treatment to improve printability.

4. The surface protection film according to one of the claims 1 to 3, **characterized in that** the release additives are carbamates, silicones, siloxanes or fluorine-bearing hydrocarbons.

5. The surface protection film according to one of the claims 1 to 4, **characterized in that** the adhesion layer (3) has an outwardly disposed bonding layer (7) and an intermediate layer (8).

6. The surface protection film according to claim 5, **characterized in that** the intermediate layer (8) substantially comprises plastic of the groups consisting of styrene block copolymers, polyolefin elastomers and/or polyolefin plastomers.

7. The surface protection film according to claim 5 or 6, **characterized in that** the intermediate layer (8) substantially comprises a polyethylene - preferably a LLDPE - and/or a polypropylene.

8. A method of producing surface protection films, in particular according to one of the claims 1 to 7, wherein a carrier layer (2) is extruded in a first extruder (11), an adhesion layer (3) is extruded in a second extruder (12) and the carrier layer (2) is connected to the adhesion layer (3), **characterized in that** the carrier layer (2) and/or the bonding layer (3) is printed upon and said printing is enclosed between the carrier layer (2) and the adhesion layer (3) by the connection of the carrier layer (2) to the adhesion layer (3).

9. The method according to claim 8, **characterized in that** the carrier layer (2) is printed substantially inline in a station on one side and is provided with a separating lacquer layer on the other side.

10. The method according to claim 8 or 9, **characterized in that** the carrier layer (2) and/or the adhesion layer (3) is printed upon by means of a flexographic printing method or an intaglio printing method.

11. The method according to one of the claims 8 to 10, **characterized in that** the carrier layer (2) is connected to the adhesion layer (3) by pressing between a cooling roller (14) on the one hand and a smoothing belt (15) or a counterpressure roller on the other hand, wherein the carrier layer (2) is preferably pressed to the adhesion layer (3), while the carrier layer (2) and/or the adhesion layer (3) are still at least partially molten.

12. The method according to claim 11, **characterized in that** by means of the smoothing belt (15) or the counterpressure roller, a surface of the adhesion layer (3) is produced which is so smooth that the intermolecular forces between the adhesion layer (3) and a surface to be protected produce an adhesion force.

13. Use of a surface protection film according to one of the claims 1 to 7 for temporarily protecting plastic or metal surfaces for components like windows or doors and/or painted or unpainted metal surfaces and/or sporting article surfaces and/or plastic surfaces with a matt to structured surface nature.

14. Use of a surface protection film according to one of the claims 1 to 7 in a shapeable coating, wherein the surface protection film (1) adheres to the shapeable coating, the shapeable coating is applied to an object to be coated and then the surface protection film (1) is removed from the shapeable coating, preferably in residue-free fashion.

## Revendications

1. Feuille de protection de surface avec une couche porteuse (2) et une couche adhésive (3) reliée avec, dans laquelle une impression (4) est disposée entre la couche porteuse (2) et la couche adhésive (3) et la couche porteuse (2) présente une couche externe (5) et une couche interne (6), **caractérisée en ce que** la couche externe (5) présente des additifs de décollement, qui diminuent l'adhérence à la couche adhésive (3) dans la bobine.

2. Feuille de protection de surface selon la revendication 1, **caractérisée en ce que** la couche porteuse (2) et / ou la couche adhésive (3) est à couches multiples.

3. Feuille de protection de surface selon la revendication 1 ou 2, **caractérisée en ce que** la couche interne (6) présente des additifs d'imprimabilité qui améliorent l'imprimabilité, et / ou **en ce que** la couche interne (6) est prétraitée pour améliorer l'imprimabilité à l'aide d'un traitement corona.

4. Feuille de protection de surface selon l'une des revendications 1 à 3, **caractérisée en ce que** les additifs de décollement sont des carbamates, des silicones, des siloxanes ou des hydrocarbures contenant du fluor.

5. Feuille de protection de surface selon l'une des revendications 1 à 4, **caractérisée en ce que** la couche adhésive (3) présente une couche d'adhérence (7) située à l'extérieur et une couche intermédiaire (8).

6. Feuille de protection de surface selon la revendication 5, **caractérisée en ce que** la couche intermédiaire (8) est composée essentiellement de matière synthétique des groupes des copolymères à blocs styrène, des polyoléfines élastomères et / ou des polyoléfines plastomères.

7. Feuille de protection de surface selon la revendication 5 ou 6, **caractérisée en ce que** la couche intermédiaire (8) est composée essentiellement d'un polyéthylène - de préférence d'un PEBDL - et / ou d'un polypropylène.

8. Procédé de fabrication de feuilles de protection de surface, en particulier selon l'une des revendications 1 à 7, dans lequel une couche porteuse (2) est extrudée dans une première extrudeuse (11), une couche adhésive (3) est extrudée dans une deuxième extrudeuse (12) et la couche porteuse (2) est reliées à la couche adhésive (3), **caractérisé en ce que** la couche porteuse (2) et / ou la couche adhésive (3) est imprimée et cette impression, par la liaison de la couche porteuse (2) avec la couche adhésive (3), est incluse entre celles-ci.

9. Procédé selon la revendication 8, **caractérisé en ce que** la couche porteuse (2) est imprimée sur un côté essentiellement en ligne dans une station et sur l'autre côté est dotée d'une couche de vernis de séparation.

10. Procédé selon la revendication 8 ou 9, **caractérisé en ce que** la couche porteuse (2) et / ou la couche adhésive (3) est imprimée à l'aide d'un procédé d'impression flexographique ou d'un procédé d'impression en héliogravure.

11. Procédé selon l'une des revendications 8 à 10, **caractérisé en ce que** la couche porteuse (2) est reliée à la couche adhésive (3) par compression entre un cylindre de refroidissement (14), d'une part, et une bande de lissage (15) ou un rouleau de contre-pression, d'autre part, la couche porteuse (2) étant comprimée de préférence avec la couche adhésive (3), pendant que la couche porteuse (2) et / ou la couche adhésive (3) sont encore fondues au moins partiellement.

12. Procédé selon la revendication 11, **caractérisé en ce qu'**à l'aide de la bande de lissage (15) ou du rouleau de contre-pression, une surface de la couche adhésive (3) est produite, laquelle est si lisse que les forces intermoléculaires entre la couche adhésive (3) et une surface à protéger produisent une force d'adhérence.

13. Utilisation d'une feuille de protection de surface selon l'une des revendications 1 à 7 pour la protection temporaire de surfaces synthétiques ou métalliques pour des éléments de construction comme des fenêtres ou des portes et / ou des surfaces métalliques laquées ou non laquées et / ou des surfaces d'articles de sport et / ou des surfaces synthétiques avec une nature de surface mate à structurée.

14. Utilisation d'une feuille de protection de surface selon l'une des revendications 1 à 7 dans une enduction déformable, dans laquelle la feuille de protection de surface (1) adhère à l'enduction déformable, l'enduction déformable est agencée sur un objet à enduire et, ensuite, la feuille de protection de surface (1) est enlevée de l'enduction déformable, de préférence sans laisser de résidus.
